## Europäisches Patentamt

## European Patent Office

## Office européen des brevets

(19)

(11) Veröffentlichungsnummer: **0 212 690**
**B1**

(12) **EUROPÄISCHE PATENTSCHRIFT**

(45) Veröffentlichungstag der Patentschrift:
**02.08.89**

(51) Int. Cl.⁴: **C01C 1/10**

(21) Anmeldenummer: **86200990.9**

(22) Anmeldetag: **07.06.86**

(54) **Verfahren zum Gewinnen von Ammoniak aus einem Ammoniak, Kohlendioxyd und Schwefelwasserstoff enthaltenden Abwasser.**

(30) Priorität: **12.06.85 DE 3520934**

(43) Veröffentlichungstag der Anmeldung:
**04.03.87 Patentblatt 87/10**

(45) Bekanntmachung des Hinweises auf die Patenterteilung:
**02.08.89 Patentblatt 89/31**

(84) Benannte Vertragsstaaten:
**AT CH DE GB LI**

(56) Entgegenhaltungen:
**DE-A- 2 527 985**
**DE-A- 2 744 437**
**US-A- 1 928 510**
**US-A- 4 002 565**

(73) Patentinhaber: **METALLGESELLSCHAFT AG,**
**Reuterweg 14 Postfach 3724, D-6000 Frankfurt/M.1(DE)**
Patentinhaber: **CHEMIE LINZ AKTIENGESELLSCHAFT,**
**St. Peter-Strasse 25, A-4020 Linz(AT)**

(72) Erfinder: **Hilsebein, Wolfgang, Am Eisernen Schlag 7,**
**D-6000 Frankfurt am Main(DE)**
Erfinder: **Ungar, Gert, Thomas-Mann-Strasse 12,**
**D-6457 Maintal(DE)**
Erfinder: **Stönner, Hans Martin, Am Ritterhof 11,**
**D-6236 Eschborn(DE)**

(74) Vertreter: **Rieger, Harald, Dr., Reuterweg 14,**
**D-6000 Frankfurt am Main(DE)**

**Beschreibung**

Die Erfindung betrifft ein Verfahren zum Gewinnen von Ammoniak aus einem $NH_3$, $CO_2$, $H_2S$ und Inertgase enthaltenden Abwasser, welches man einer Abtreibekolonne (Totalabtreibekolonne) aufgibt und als Kopfprodukt ein Inertgase enthaltendes, an $NH_3$, $CO_2$ und $H_2S$ reiches Gemisch abzieht, dieses Gemisch zerlegt man in mindestens einer weiteren Abtreibekolonne in ein $NH_3$-reiches Gemisch und ein an den Sauergasen $CO_2$ und $H_2S$ reiches Gemisch, das $NH_3$-reiche Gemisch wird mit flüssigem Ammoniak gewaschen, das an den Sauergasen reiche Gemisch wird vom Kopf einer Entsäuerungskolonne abgezogen und aus dem Sumpf der Entsäuerungskolonne zieht man eine Flüssigphase ab, die man teilweise in die Totalabtreibekolonne leitet.

Ein solches Verfahren ist aus dem deutschen Patent 2 527 985 und dem dazu korrespondierenden US-Patent 4 060 591 bekannt.

Der Erfindung liegt die Aufgabe zugrunde, die Wirtschaftlichkeit des bekannten Verfahrens zu verbessern, für eine einfache und wirksame Abtrennung von Inertgasen zu sorgen und Sauergase frühzeitig vom Ammoniak zu trennen.

Erfindungsgemäß geschieht dies beim eingangs genannten Verfahren dadurch, daß man das Kopfprodukt der Totalabtreibekolonne in einem Kondensator bei einem Druck von 1 bis 7 bar kühlt und so weitgehend in eine Flüssigphase überführt, daß die Flüssigphase 90 bis 100% des dem Kondensator zugeführten $NH_3$ enthält, daß man einen Teilstrom der aus der Entsäuerungskolonne abgezogenen Flüssigphase in den Kondensator leitet, daß man aus dem Kondensator ein inertgasreiches Gasgemisch abzieht, daß man die Flüssigphase aus dem Kondensator mit einer Temperatur von 30 bis 90°C etwa auf einen mittleren Boden einer unter einem Druck von 1 bis 4 bar arbeitenden zweiten Abtreibekolonne ($NH_3$-Abtreibekolonne) aufgibt und als Kopfprodukt ein $NH_3$-reiches Gasgemisch abzieht, das Gasgemisch bis zur Bildung von Kondensat kühlt, mit einem Teil dieses Kondensats berieselt und einen weiteren Teil des Kondensats zum Kopf der $NH_3$-Abtreibekolone zurückleitet, das $NH_3$-reiche Gasgemisch mit Wasser und Ammoniak unter einem Druck von 1 bis 4 bar wäscht und das gewaschene $NH_3$-Gas verflüssigt, und daß man das Sumpfprodukt der $NH_3$-Abtreibekolonne in der Entsäuerungskolonne bei einem Druck im Bereich von 1,5 bis 24 bar behandelt, wobei der Druck 0,5 bis 20 bar höher ist als in der $NH_3$-Abtreibekolonne.

Bei diesem Verfahren spielt der Kondensator eine wichtige Rolle, weil hier $NH_3$, $CO_2$ und $H_2S$ fast vollständig in eine Flüssigphase übergehen und auf diese Weise von den für die Weiterverarbeitung störenden Gasen, insbesondere $N_2$, $H_2$, $CO$ und $CH_4$, die hier Inertgase sind, getrennt werden. Das inertgasreiche Gasgemisch aus dem Kondensator kann als Abstreifgas für die Vorbehandlung des Abwassers in einer Kolonne dienen, in welcher man das Abwasser von Lösungsmittelresten einer vorausgegangenen Phenolextraktion befreit. Weitere Verfahrensvarianten ergeben sich aus den Unteransprüchen.

Bei dem erfindungsgemäß zu behandelnden Abwasser handelt es sich zumeist um Kondensat, das z.B. bei der Entgasung, Hydrierung, Vergasung oder Verflüssigung von Kohlen oder hochsiedenden Ölfraktionen (z.B. Rückstandsölen) anfällt. Dieses Kondensat wird, falls erforderlich, zunächst von Staub, Teer, Öl, Fettsäuren und Phenolen befreit, bevor man es der Behandlung zum getrennten Gewinnen von Ammoniak sowie $CO_2$ und $H_2S$ unterzieht.

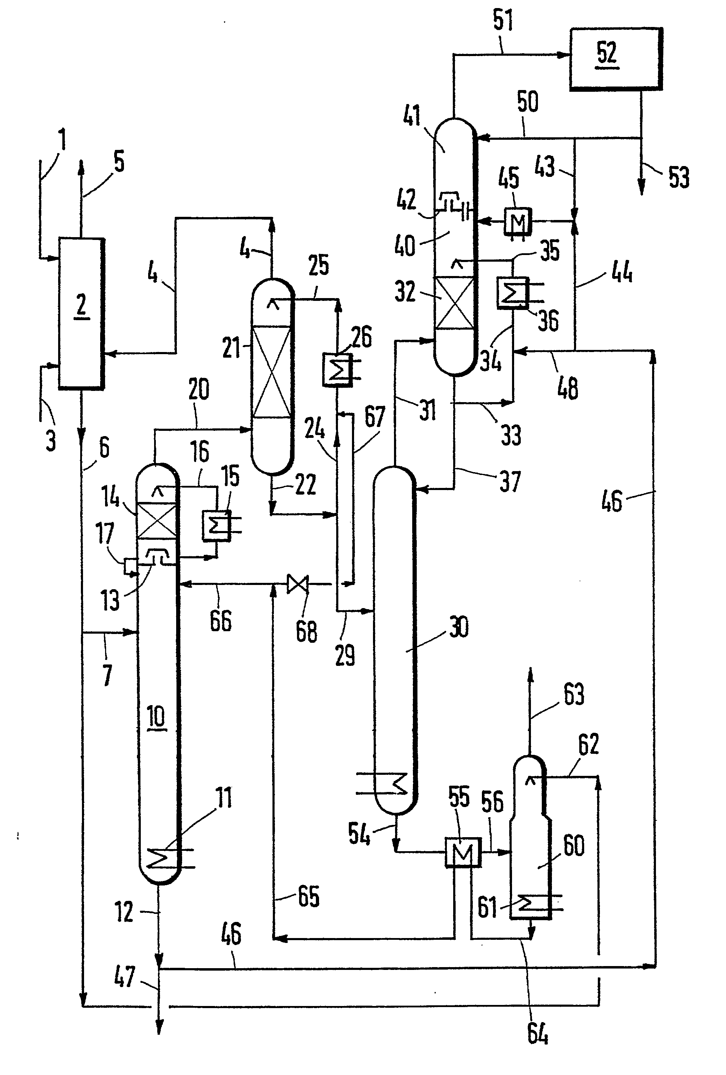

Ausgestaltungsmöglichkeiten des Verfahrens werden mit Hilfe der Zeichnung erläutert.

Das zu behandelnde Abwasser, bei dem es sich üblicherweise um ein Kondensat aus der Entgasung oder Vergasung von Kohlen handelt, wird in der Leitung 1 herangeführt. Zuvor waren aus dem Abwasser Staub, Teer, Öl und Phenole entfernt worden, wobei davon ausgegangen wird, daß das Abwasser noch Lösungsmittelreste der Phenolextraktion enthält. In einer Kolonne 2 wird das Abwasser mit Abstreifgas aus der Leitung 3 behandelt, weiteres Abstreifgas kommt aus der Leitung 4. Die Abstreifgase, die das Lösungsmittel, z. B. Diisopropyläther, mit sich führen, verlassen die Kolonne 2 in der Leitung 5 und werden einer nicht dargestellten Aufarbeitung zugeführt.

Das in der Leitung 6 aus der Kolonne 2 kommende Wasser enthält nun noch vor allem $NH_3$, $CO_2$ und $H_2S$ sowie weitere Gase in geringer Konzentration. Das Abwasser wird zum größten Teil durch die Leitung 7 einer Totalabtreibekolonne 10 aufgegeben, in welcher alle abtreibbaren Gase aus dem Abwasser entfernt werden. Die Kolonne 10, deren Böden zur Vereinfachung nicht dargestellt sind, weist im Sumpf einen an sich bekannten Aufkocher 11 auf, der für den nötigen Auftrieb der Gase sorgt. Behandeltes Abwasser strömt in die Leitung 12 ab. Die in der Kolonne 10 abgetriebenen Gase gelangen durch den gasdurchlässigen Boden 13 nach oben in einen Teilkondensator 14, in welchem sie mit umlaufendem, gekühltem Kondensat berieselt werden, um vor allem Wasserdampf zu kondensieren. Das Kondensat strömt unter der Wirkung einer nicht dargestellten Pumpe durch einen äußeren Kühler 15 und gelangt in der Leitung 16 zurück in den Teilkondensator 14. Überschüssiges Kondensat wird durch den Überlauf 17 der Totalabtreibekolonne 10 zugeführt.

Das Kopfprodukt der Totalabtreibekolonne 10 verläßt den Teilkondensator 14 in der Leitung 20 und tritt mit einem $NH_3$-Gehalt, bezogen auf feuchtes Gas, von 30 bis 70 Vol.-% und vorzugsweise 50 bis 60 Vol.-% in einen weiteren Kondensator 21 ein. Hier erfolgt eine intensive Kühlung, so daß sich eine Flüssigphase mit einer Temperatur von 30 bis 90°C ausbildet. Der Kondensator 21 besitzt einen Flüssigkeitsumlauf durch die Leitungen 22, 24 und 25, wobei ein externer Kühler 26 die Temperatur niedrig hält.

Die Flüssigphase des Kondensators 21 nimmt mindestens 90% des in der Leitung 20 herangeführten $NH_3$ sowie weitgehend auch das herangeführte $CO_2$ und $H_2S$ auf. Inertgase wie $N_2$, $H_2$, CO und $CH_4$ werden dagegen nicht in der Flüssigphase gelöst, sondern vom Gasgemisch getrennt und ziehen in der Leitung 4 ab. Diese Inertgase dienen in der Kolonne 2 als zusätzliche Abstreifgase. Im Kondensator 21 liegt der Druck im Bereich von 1 bis 7 bar und vorzugsweise im Bereich von 2 bis 4 bar; der Kühler 26 ist als Luft- oder Wasserkühler ausgebildet.

Ein Teilstrom der Flüssigphase aus der Leitung 22 wird in der Leitung 29 abgezogen und mit einer Temperatur von etwa 30 bis 90°C einer $NH_3$-Abtreibekolonne 30 aufgegeben. Auch bei dieser Kolonne 30 von an sich bekannter Bauart wurden zur Vereinfachung die Böden nicht dargestellt. Die Kolonne 30 hat z.B. 10 bis 30 Böden, wobei man die Flüssigphase aus der Leitung 29 etwa auf einen mittleren Boden zuführt. Der Druck in der $NH_3$-Abtreibekolonne 30 liegt bei 1 bis 4 bar. Das Kopfprodukt der Kolonne 30, ein $NH_3$-reiches Gas, das Reste von Sauergasen ($CO_2$, $H_2S$) enthält, wird in der Leitung 31 zunächst einem Teilkondensator 32 zugeführt, der mit Kondensatumlauf durch die Leitungen 33, 34, 35 mit externem Kühler 36 arbeitet. Ein Teilstrom des Kondensats gelangt durch die Leitung 37 als Rückfluß auf den Kopf der Kolonne 30. Über dem Teilkondensator 32 befinden sich eine erste Waschstufe 40 und eine zweite Waschstufe 41, zwischen denen ein Boden 42 angeordnet ist, der nach oben Gas und nach unten Flüssigkeit durchläßt. Als Waschflüssigkeit der ersten Waschstufe 40 dient ein Gemisch aus verflüssigtem Ammoniak aus der Leitung 43 und Abwasser aus der Leitung 44, wobei das Gemisch noch über einen Kühler 45 geführt wird. Das Abwasser ist ein Teilstrom des Abwassers der Leitung 12, das in der Leitung 46 herangeführt wird; der Hauptteil des Abwassers wird in der Leitung 47 abgeführt. Ein Teil des Abwassers der Leitung 46 gelangt durch die Leitung 48 in die umlaufende Flüssigkeit des Teilkondensators 32. In den Waschstufen 40 und 41 sowie im Teilkondensator 32 herrscht etwa der gleiche Druck wie in der Kolonne 30.

In der zweiten Waschstufe 41 wird mit verflüssigtem Ammoniak aus der Leitung 50 gewaschen und praktisch reines $NH_3$ gelangt in der Leitung 51 zur Ammoniak-Verflüssigung 52. Verflüssigtes Ammoniak steht als Produkt in der Leitung 53 zur Verfügung. Falls das Abwasser in der Leitung 6 organische Bestandteile wie insbesondere Alkohole, Ketone, Nitrile und Pyridinbasen enthält, reichern sich diese in der Waschstufe 41 an und können dort als Flüssigkeits-Teilstrom über eine nicht dargestellte Leitung abgezogen werden.

Das sich im Sumpf der $NH_3$-Abtreibekolonne 30 ansammelnde Wasser enhält vor allem Ammoniumsalze. Die Temperaturen im Sumpf der Kolonne 30 liegen im Bereich von 60 bis 110 °C.

In der Leitung 54 fließt das Wasser unter der Wirkung einer nicht dargestellten Pumpe zunächst zu einem Wärmeaustauscher 55 und tritt durch die Leitung 56 mit einer Temperatur im Bereich von 90 bis 150 °C in die Entsäuerungskolonne 60 ein. In der Kolonne 60 herrscht ein Druck, der 0,5 bis 20 bar und vorzugsweise 2 bis 12 bar über dem Druck in der Kolonne 30 liegt. Der höhere Druck in der Kolonne 60 verbessert die Entsäuerung. In der Kolonne 60 wird mit Hilfe des Aufkochers 61 ein an $NH_3$, $CO_2$ und $H_2S$ reiches Gasgemisch abgetrieben, das mit Abwasser aus der Leitung 62 gewaschen wird, bevor es in der Leitung 63 zur Weiterverarbeitung geführt wird. Das Gas der Leitung 63 kann z.B. als Abstreifgas der Leitung 3 oder direkt einer Schwefelgewinnung zugeführt werden. In der Kolonne 60 fällt als Sumpfprodukt entsäuertes Wasser an, das $NH_3$ und geringe Mengen an $CO_2$ und $H_2S$ enthält. Dieses Sumpfprodukt wird mit Temperaturen von 120 bis 170 °C in der Leitung 64 abgezogen, es gibt zunächst einen Teil seiner Wärme im Austauscher 55 ab und gelangt dann über die Leitungen 65 und 66 zumindest teilweise in die Totalabtreibekolonne 10. Ein durch das Ventil 68 einstellbarer Teilstrom wird in der Leitung 67 abgeführt und der Flüssigphase zugemischt, die in der Leitung 24 aus dem Kondensator 21 kommt. Dadurch werden die Kolonne 10 und der Kondensator 21 entlastet und außerdem wird der Wasseranteil in der Flüssigkeit der Leitung 29 eingestellt.

Beispiel:

In einer der Zeichnung entsprechenden Verfahrensführung, bei der die Kolonne 2 unberücksichtigt bleibt, werden in der Leitung 6 pro Stunde 310 m³ Abwasser aus der Kohlevergasung herangeführt. Das Abwasser wurde zuvor von Teer, Staub, Öl und Phenolen befreit. In der nachfolgenden Tabelle sind zu den verschiedenen Leitungen des in der Zeichnung dargestellten und erläuterten Verfahrens die Gehalte an $NH_3$, $CO_2$, $H_2S$, $H_2O$ und Inertgase in kmol/h angegeben, dazu Druck und Temperatur. Bei den Inertgasen handelt es sich um ein Gemisch aus CO, $H_2$, $CH_4$ und $N_2$. Temperaturen und Drücke im Kopf- und Sumpfbereich der verschiedenen Apparaturen (Kolonnen, Kondensatoren etc.) ergeben sich aus den Daten der zugehörigen Leitungen.

EP 0 212 690 B1

| Leitung | NH₃ | CO₂ | H₂S | H₂O | Inert-gase | Druck (bar) | Temp. (°C) |
|---|---|---|---|---|---|---|---|
| 6 | 156 | 148 | 8 | 17 274 | 0,07 | 1,9 | 50 |
| 4 | 7 | 7 | 0,14 | 10 | 0,06 | 1,9 | 74 |
| 7 | 133 | 126 | 7 | 14 683 | 0,06 | 1,9 | 50 |
| 12 | 0,6 | 0,3 | 0,01 | 17 539 | 0,0 | 2,4 | 126 |
| 29 | 785 | 190 | 12 | 2706 | – | 2,0 | 80 |
| 31 | 286 | 0,1 | 3 | 30 | – | 1,9 | 64 |
| 37 | 138 | 0,1 | 3 | 307 | – | 1,9 | 43 |
| 46 | – | – | – | 277 | – | 1,9 | 35 |
| 47 | 0,6 | 0,1 | 0,01 | 17 270 | – | 2,4 | 40 |
| 51 | 358 | – | – | | – | 1,6 | –24 |
| 53 | 148 | – | – | | – | 1,6 | –24 |
| 54 | 637 | 190 | 12 | 2983 | – | 2,0 | 88 |
| 62 | 23 | 22 | 1 | 2591 | 0,01 | 1,9 | 35 |
| 63 | – | 141 | 8 | 1 | 0,01 | 10,2 | 41 |
| 64 | 660 | 71 | 5 | 5573 | – | 10,5 | 148 |

**Patentansprüche**

1. Verfahren zum Gewinnen von Ammoniak aus einem NH₃, CO₂, H₂S und Inertgase enthaltenden Abwasser, welches man einer Abtreibekolonne (Totalabtreibekolonne (10)) aufgibt und als Kopfprodukt ein Inertgase enthaltendes, an NH₃, CO₂ und H₂S reiches Gemisch abzieht, dieses Gemisch zerlegt man in mindestens einer weiteren Abtreibekolonne in ein NH₃-reiches Gemisch und ein an den Sauergasen CO₂ und H₂S reiches Gemisch, das NH₃-reiche Gemisch wird mit flüssigem Ammoniak gewaschen, das an den Sauergasen reiche Gemisch wird vom Kopf einer Entsäuerungskolonne (60) abgezogen und aus dem Sumpf der Entsäuerungskolonne zieht man eine Flüssigphase ab, die man teilweise in die Totalabtreibekolonne leitet, dadurch gekennzeichnet, daß man das Kopfprodukt der Totalabtreibekolonne (10) in einem Kondensator (21) bei einem Druck von 1 bis 7 bar kühlt und so weitgehend in eine Flüssigphase überführt, daß die Flüssigphase 90 bis 100% des dem Kondensator zugeführten NH₃ enthält, daß man einen Teilstrom der aus der Entsäuerungskolonne (60) abgezogenen Flüssigphase in den Kondensator leitet, daß man aus dem Kondensator ein inertgasreiches Gasgemisch abzieht, daß man die Flüssigphase aus dem Kondensator mit einer Temperatur von 30 bis 90°C etwa auf einen mittleren Boden einer unter einem Druck von 1 bis 4 bar arbeitenden zweiten Abtreibekolonne (NH₃-Abtreibekolonne (30)) aufgibt und als Kopfprodukt ein NH₃-reiches Gasgemisch abzieht, das Gasgemisch bis zur Bildung von Kondensat kühlt, mit einem Teil dieses Kondensats berieselt und einen weiteren Teil des Kondensats zum Kopf der NH₃-Abtreibekolonne zurückleitet, das NH₃-reiche Gasgemisch mit Wasser und Ammoniak unter einem Druck von 1 bis 4 bar wäscht und das gewaschene NH₃-Gas verflüssigt, und daß man das Sumpfprodukt der NH₃-Abtreibekolonne (30) in der Entsäuerungskolonne (60) bei einem Druck im Bereich von 1,5 bis 24 bar behandelt, wobei der Druck 0,5 bis 20 bar höher ist als in der NH₃-Abtreibekolonne.

2. Verfahren nach Anspruch 1, dadurch gekennzeichnet, daß man das inertgasreiche Gasgemisch aus dem Kondensator (21) als Abstreifgas einer Vorbehandlungskolonne (2) zuführt, in welcher aus dem Abwasser Lösungsmittel einer vorausgegangenen Phenolextraktion abgetrieben wird.

3. Verfahren nach Anspruch 2, dadurch gekennzeichnet, daß man das in der Entsäuerungskolonne (60) abgetriebene, an den Sauergasen CO₂ und H₂S reiche Gemisch mit einem Teil des aus der Vorbehandlungskolonne (2) kommende Abwassers wäscht und dieses Abwasser durch die Entsäuerungskolonne leitet.

4. Verfahren nach Anspruch 1, dadurch gekennzeichnet, daß man das vom Kopf der NH₃-Abtreibekolonne (30) kommende, NH₃-reiche Gasgemisch nach der Kühlung mindestens zweistufig wäscht, wobei man in einer Waschstufe (40) mit einem Gemisch aus verflüssigtem Ammoniak und Wasser und in einer weiteren Waschstufe (41) mit verflüssigtem Ammoniak wäscht.

5. Verfahren nach Anspruch 1 oder 4, dadurch gekennzeichnet, daß man einen Teilstrom des Abwassers aus der Totalabtreibekolonne (10) zum Waschen des NH₃-reichen Gasgemisches aus der NH₃-Abtreibekolonne (30) verwendet.

4

## Claims

1. A process for recovering ammonia from waste water containing $NH_3$, $CO_2$, $H_2S$ and inert gases, which is supplied to a stripping column (total stripping column (10)) and a mixture which contains inert gases and is rich in $NH_3$, $CO_2$ and $H_2S$ is removed as a head product, this mixture is broken down in at least one additional stripping column into an $NH_3$-rich mixture and a mixture which is rich in the acid gases $CO_2$ and $H_2S$, the $NH_3$-rich mixture is washed with liquid ammonia, the mixture which is rich in acid gases is removed from the head of a deacidification column (60) and a liquid phase is removed from the bottom of the deacidification column, which phase is partly passed into the total stripping column, characterised in that the head product of the total stripping column (10) is cooled in a condenser (21) at a pressure of 1 to 7 bar and is thus largely converted into a liquid phase, that the liquid phase contains 90 to 100% of the $NH_3$ which is fed to the condenser, that a partial stream of the liquid phase which is removed from the deacidification column (60) is passed into the condenser, that a gas mixture which is rich in inert gases is removed from the condenser, that the liquid phase from the condenser is supplied at a temperature of 30 to 90°C to approximately a central plate of a second stripping column ($NH_3$ stripping column (30)), which operates at a pressure of 1 to 4 bar, and an $NH_3$-rich gas mixture is removed as a head product, the gas mixture is cooled until a condensate froms, it is sprinkled with part of this condensate and a further part of the condensate is recycled to the head of the $NH_3$ stripping column, the $NH_3$-rich gas mixture is washed with water and ammonia at a pressure of 1 to 4 bar and the washed $NH_3$-gas is liquefied, and that the bottom product of the $NH_3$ stripping column (30) is treated in the deacidification column (60) at a pressure in the range of 1.5 to 24 bar, the pressure being 0.5 to 20 bar greater than in the $NH_3$ stripping column.

2. A process according to claim 1, characterised in that the gas mixture which is rich in inert gas and comes from the condenser (21) is supplied to a pretreatment column (2) as a stripping gas, in which column solvents of a preceding phenol extraction are stripped from the waste water.

3. A process according to claim 2, characterised in that the mixture which is rich in the acid gases $CO_2$ and $H_2S$ and which is stripped in the deacidification column (60) is washed with part of the waste water coming from the pre-treatment column (2) and this waste water is passed through the deacidification column.

4. A process according to claim 1, characterised in that the $NH_3$-rich gas mixture coming from the head of the $NH_3$ stripping column (30) is washed in at least two stages after cooling, washing being carried out in one washing stage (40) with a mixture of liquefied ammonia and water and in another washing stage (41) with liquefied ammonia.

5. A process according to claim 1 or 4, characterised in that a partial stream of the waste water from the total stripping column (10) is used to wash the $NH_3$-rich gas mixture from the $NH_3$ stripping column (30).

## Revendications

1. Procédé d'obtention d'ammoniac à partir d'une eau résiduaire contenant $NH_3$, $CO_2$, $H_2S$ et des gaz inertes, qui consiste à la charger dans une colonne d'extraction (colonne d'extraction totale (10)) et à soutirer, comme produit de tête, un mélange contenant des gaz inertes et riche en $NH_3$, en $CO_2$ et en $H_2S$, à décomposer ce mélange dans au moins une autre colonne d'extraction en un mélange riche en $NH_3$ et en mélange riche en les gaz acides que sont $CO_2$ et $H_2S$, à laver le mélange riche en $NH_3$ par de l'ammoniac liquide, à soutirer le mélange riche en gaz acides de la tête d'une colonne de désacidulation (60) et à soutirer du bas de la colonne de désacidulation une phase liquide que l'on envoie partiellement à la colonne d'extraction totale, caractérisé en ce qu'il consiste à refroidir le produit de tête de la colonne d'extraction totale (10) dans un condenseur (21), sous une pression de 1 à 7 bar et à le transformer dans une grande mesure en une phase liquide de façon que la phase liquide contienne de 90 à 100% du $NH_3$ envoyé au condenseur, à envoyer un courant partiel de la phase liquide soutirée de la colonne de désacidulation (60) au condenseur, à soutirer du condenseur un mélange gazeux riche en gaz inerte, à charger la phase liquide sortant du condenseur, en ayant une température de 30 à 90°C environ, sur un plateau intermédiaire d'une seconde colonne d'extraction (colonne d'extraction de $NH_3$ (30)), opérant sous une pression de 1 à 4 bar, et à soutirer comme produit de tête un mélange gazeux riche en $NH_3$, à refroidir le mélange gazeux jusqu'à formation d'un produit condensé, à arroser avec une partie de ce produit condensé et à retourner une autre partie de ce produit condensé en tête de la colonne d'extraction de $NH_3$, à laver le mélange gazeux riche en $NH_3$ par de l'eau et par de l'ammoniac sous une pression de 1 à 4 bar, et à liquéfier le $NH_3$ gazeux lavé et à traiter le produit de queue de la colonne d'extraction du $NH_3$ (30) dans la colonne de désacidulation (60) sous une pression de l'ordre de 1,5 à 24 bar, la pression étant plus élevée de 0,5 à 20 bar que celle régnant dans la colonne d'extraction du $NH_3$.

2. Procédé suivant la revendication 1, caractérisé en ce qu'il consiste à envoyer le mélange gazeux, riche en gaz inerte, du condenseur (21), comme gaz de balayage, à une colonne de prétraitement, dans laquelle le solvant d'une extraction précédente au phénol est extrait de l'eau résiduaire.

3. Procédé suivant la revendication 2, caractérisé en ce qu'il consiste à laver le mélange extrait dans la colonne de désacidulation (60) et riche en gaz acides que sont $CO_2$ et $H_2S$, par une partie de l'eau résiduaire venant de la colonne de prétraitement (2) et à envoyer cette eau résiduaire dans la colonne de désacidulation.

4. Procédé suivant la revendication 1, caractérisé en ce qu'il consiste à laver au moins en deux stades, après le refroidissement, le mélange gazeux riche en $NH_3$ provenant de la tête de la colonne d'extraction du $NH_3$ (30), en lavánt dans un stade de lavage (40), par un mélange d'ammoniac liquéfié et d'eau et, dans un autre stade de lavage (41), par de l'ammoniac liquéfié.

5. Procédé suivant la revendication 1 ou 4, caractérisé en ce qu'il consiste à utiliser un courant partiel de l'eau résiduaire provenant de la colonne d'extraction totale (10) pour laver le mélange gazeux riche en $NH_3$ provenant de la colonne d'extraction du $NH_3$ (30).